# EUROPÄISCHE PATENTANMELDUNG

(11) **EP 1 939 587 A2**
(43) Veröffentlichungstag der Anmeldung: **02.07.2008**
(21) Anmeldenummer: 07121886.1
(22) Anmeldetag: 29.11.2007
(51) Int. Cl.: G01C 15/00

(54) **Messgeräteaufnahmevorrichtung**

(30) Priorität: 28.12.2006 DE 102006061729
(71) Anmelder: ROBERT BOSCH GMBH, 70442 Stuttgart (DE)
(72) Erfinder: Mueller-Boysen, Ulrich, 73732, Esslingen (DE); Keusch, Siegfried, 73779, Deizisau (DE); Adamczak, Wolfgang, 70597, Stuttgart (DE)

(57) **Zusammenfassung**

Die Erfindung betrifft eine Messgeräteaufnahmevorrichtung (1) mit einer ersten Aufnahmeeinrichtung (3) zum Aufnehmen eines ersten Messgerätes (39) und mit einer Festlegungseinrichtung (4) zum Festlegen der Messgeräteaufnahmevorrichtung (1) an einem Stativ. Erfindungsgemäß ist vorgesehen, dass ein erster mit dem ersten Messgerät (39) verbindbarer erster Adapter (9) vorgesehen ist, der lösbar an der ersten Aufnahmeeinrichtung (3) mittels eines Rastmechanismus befestigbar ist.

## Beschreibung

### Stand der Technik

Die Erfindung betrifft eine Messgeräteaufnahmevorrichtung gemäß dem Oberbegriff des Anspruches 1.

Messgeräte, wie selbstnivellierende Linienlaser müssen vor der Ausführung von Messaufgaben an Stativen, zu denen auch einfache Stativrohre, Klemm- oder Teleskopstangen zu zählen sind, festgelegt werden. Hierzu wird in der Praxis eine sog. Messgeräteaufnahmevorrichtung verwendet, an der das Messgerät befestigbar ist und mittels der dann das Messgerät an dem Stativ festlegbar ist. Es sind Ausführungen von Messgeräteaufnahmevorrichtungen bekannt, bei denen das Anbringen des Messgerätes an der Messgeräteaufnahmevorrichtung und die Festlegung der Messgeräteaufnahmevorrichtung an einem Stativ umständlich und zeitaufwändig sind, insbesondere deshalb, weil entsprechende Werkzeuge, wie Schraubendreher zur Festlegung des Messgerätes und/oder der Messgeräteaufnahmevorrichtung benötigt werden.

### Offenbarung der Erfindung

### Technische Aufgabe

Der Erfindung liegt daher die Aufgabe zugrunde, eine verbesserte Messgeräteaufnahmevorrichtung anzugeben, die eine schnelle, insbesondere werkzeuglose Aufnahme des Messgerätes erlaubt.

### Technische Lösung

Diese Aufgabe wird mit den Merkmalen des Anspruches 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, das Messgerät nicht unmittelbar an der ersten Aufnahmeeinrichtung festzulegen, sondern hierfür einen Adapter vorzusehen, der zunächst einmalig an dem Messgerät befestigt werden muss. Dabei ist es denkbar, für unterschiedliche Messgeräte unterschiedlich ausgebildete Adapter vorzusehen, die speziell auf die Befestigungsmerkmale des jeweiligen Messgerätes abgestimmt sind. Alle Adapter haben jedoch gemein, dass sie mit der Aufnahmeeinrichtung zusammenwirken, wodurch eine lösbare Befestigung des an dem Adapter festgelegten Messgerätes an der Aufnahmeeinrichtung der erfindungsgemäßen Messgeräteaufnahmevorrichtung ermöglicht wird. Um eine möglichst schnelle und einfache Befestigung des Adapters an der Aufnahmeeinrichtung zu realisieren, ist gemäß der Erfindung ein Schnellverschluss vorgesehen, der eine werkzeuglose Montage und Demontage des Adapters mit Messgerät an bzw. von der Messgeräteaufnahmevorrichtung erlaubt. Die (einmalige) Festlegung des Adapters an einem Messgerät kann beispielsweise mit einer durch eine Öffnung des Adapters geführte und mit dem Messgerät verschraubte Befestigungsschraube erfolgen. Bei dieser Befestigungsart wird für diesen Schritt zwar ein Werkzeug benötigt, was jedoch nicht von Nachteil ist, da der Adapter in der Regel nur einmal an dem entsprechenden Messgerät befestigt werden muss und das Messgerät danach mittels des Adapters werkzeuglos durch Betätigen des Schnellverschlusses handhabbar ist. Eine mögliche Ausgestaltungsform des Schnellverschlusses sieht vor, dass an der Aufnahmeeinrichtung, insbesondere an einer Aufnahmeplatte, zweckmäßigerweise im Spritzgussverfahren, ein auslenkbarer Rasthaken angeformt ist, der in eine entsprechende Ausnehmung des Adapters elastisch einschnappen kann. Zur Betätigung des Hakens (Lösevorgang) ist mit Vorteil ein Betätigungsgriff vorgesehen, durch dessen Betätigung der Adapter freigebbar ist.

Von besonderem Vorteil ist es, den Adapter und/oder die Aufnahmeeinrichtung derart auszubilden, dass der Adapter nicht nur in einer einzigen Winkelposition an der Aufnahmeeinrichtung befestigbar ist, sondern dass zwischen unterschiedlichen diskreten Winkelpositionen gewählt werden kann und/oder dass eine Befestigung des Adapters in beliebigen Winkelpositionen möglich ist. Bevorzugt ist eine Ausführungsform, bei der die Adapterplatte eine quadratische Befestigungskontur und die Aufnahmeeinrichtung eine geeignete, insbesondere ebenfalls quadratische Gegenkontur aufweist. Diese Ausbildung ermöglicht die Anordnung der Adapterplatte auf der Aufnahmeeinrichtung in vier diskreten, um jeweils 90° zueinander versetzten Winkelpositionen. Wird zusätzlich oder alternativ das Messgerät beispielsweise mittels einer zentrischen Befestigungsschraube an den Adapter festgelegt, so kann das Messgerät jede beliebige Winkelstellung zum Adapter und damit zur Aufnahmeeinrichtung einnehmen.

In Weiterbildung der Erfindung ist mit Vorteil vorgesehen, dass zusätzlich zu der ersten Aufnahmeeinrichtung für ein erstes Messgerät mindestens eine zweite Aufnahmeeinrichtung für mindestens ein zweites Messgerät vorgesehen ist. Dabei ist die zweite Aufnahmeeinrichtung mit dem ersten und/oder einem zweiten Adapter zusammenwirkend, insbesondere formkongruent ausgebildet, so dass das erste Messgerät mit daran festgelegtem ersten Adapter mit beiden Aufnahmeeinrichtungen verwendbar ist, bzw. dass zusätzlich ein zweites Messgerät mit einem zweiten Adapter an der Messgeräteaufnahmevorrichtung befestigbar ist. Hierdurch ist es erstmals möglich, mehr als ein Messgerät mit einer gemeinsamen Messgeräteaufnahmevorrichtung zu verwenden. Dies ermöglicht es mittels zweier Messgeräte horizontale und vertikale Linien in einem bestimmten Abstand zueinander zu projizieren. Ferner ist es denkbar, dass zwei Kreuzlinienlaser mit der Projektion ihrer horizontalen und vertikalen Linien eine vorgegebene Fläche umschließen. Der eingeschränkte Abbildungswinkel von Laserdioden kann dadurch vergrößert werden, dass eines der Nivelliergeräte beispielsweise um 90° gedreht an der Messgeräteaufnahmevorrichtung bzw. an der ersten Aufnahmeeinrichtung oder der zweiten Aufnahmeeinrichtung befestigt wird. Hierdurch kann die Projektionslinie verlängert werden, um bei Arbeiten im Innenbereich z.B. auf mindestens drei Wänden eine nicht unterbrochene Linie zu projizieren, wodurch viele Messaufgaben eines Rotationslasers mit Nicht-Rotationslasern erledigt werden können.

Bevorzugt ist eine Ausführungsform, bei der auch der zweite Adapter in diskreten oder beliebigen Winkelpositionen an der zweiten Aufnahmeeinrichtung befestigbar ist.

Um nicht nur eine werkzeuglose Befestigung der Messgeräte mit Adapter an der Messgeräteaufnahmevorrichtung zu gestatten, sondern auch die Messgeräteaufnahmevorrichtung selbst werkzeugfrei an einem Stativ befestigen zu können, ist in Weiterbildung der Erfindung die Festlegungseinrichtung ebenfalls werkzeuglos montierbar ausgestaltet. Unter Stativ im Sinne der Erfindung werden alle Einrichtungen verstanden, die zum Halten der Messgeräteaufnahmevorrichtung geeignet sind. Insbesondere zählen hierzu Dreibeinstative, Klemmstangen, die zwischen Decke und Boden einklemmbar sind sowie Teleskoprohre. Bevorzugt ist die Festlegungseinrichtung als Klemmeinrichtung, insbesondere als Klemmzange ausgebildet, mit der die Messgeräteaufnahmevorrichtung, insbesondere an rohrförmigen Stativteilen klemmbar ist.

Die Ausbildung der Festlegungseinrichtung als Klemmeinrichtung eignet sich ferner zur Befestigung der Messgräteaufnahmevorrichtung an unterschiedlichen Rohrdurchmessern.

Mittels der Festlegungseinrichtung kann die Arbeitshöhe schnell grob eingestellt werden. In Ausgestaltung der Erfindung ist mindestens eine Höhenverstelleinrichtung (Feinverstelleinrichtung) vorgesehen, mittels der mindestens eine Aufnahmeeinrichtung relativ zu der Festlegungseinrichtung verstellbar ist. Bevorzugt ist bei mehreren Aufnahmeeinrichtungen jeder Aufnahmeeinrichtung eine eigene Höhenverstelleinrichtung zugeordnet, um die Arbeitshöhen der unterschiedlichen Messgeräte unabhängig voneinander festlegen zu können.

Es hat sich eine Ausführungsform als vorteilhaft erwiesen, bei der die mindestens eine Höhenverstelleinrichtung eine Zahnstange umfasst, in die ein Zahnrad kämmend eingreift. Dabei ist die Zahnstange bevorzugt mit der Klemmeinrichtung und das Zahnrad mit einer Aufnahmeeinrichtung wirkverbunden, so dass durch Verdrehen des Zahnrades eine Höhenverstellung der Aufnahmeeinrichtung relativ zu der Festlegungseinrichtung und damit relativ zu dem Stativ erfolgt.

Zum Verdrehen des Zahnrades ist das Zahnrad bevorzugt auf einer Welle angeordnet, die mit mindestens einem, vorzugsweise zwei, insbesondere endseitigen Drehknöpfen ausgestattet ist.

Um eine selbsttätige Verstellung der Höhenverstelleinrichtung aufgrund des Messgerätegewichtes zu vermeiden, ist in Weiterbildung der Erfindung ein Selbsthemmmechanismus vorgesehen, der eine selbsttätige Höhenverstellung verhindert.

Bevorzugt beruht der Selbsthemmmechanismus auf einem Federelement, das sich an einem der Drehknöpfe abstützend angeordnet ist und somit zunächst die durch die Federkraft verursachte Haftreibung überwunden werden muss.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine perspektivische Ansicht einer Messgeräteaufnahmevorrichtung,
- Fig. 2:: eine geschnittene Ansicht einer Höhenverstelleinrichtung der Messgeräteaufnahmevorrichtung, und
- Fig. 3:: eine perspektivische Ansicht einer Aufnahmevorrichtung mit zwei mittels einer Adapterplatte daran befestigten Messgeräten.

### Ausführungsformen der Erfindung

In den Figuren sind gleiche Bauteile und Bauteile mit der gleichen Funktion mit den gleichen Bezugszeichen gekennzeichnet.

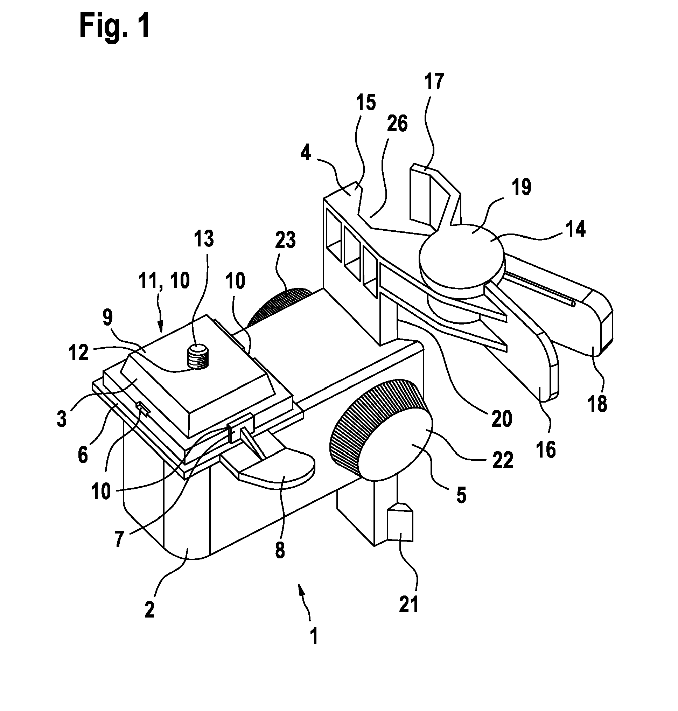

In Fig. 1 ist eine Messgeräteaufnahmevorrichtung 1 gezeigt. Die Messgeräteaufnahmevorrichtung 1 ist im Wesentlichen zweiteilig ausgebildet und weist eine an einem Gehäuse 2 angeordnete erste Aufnahmeeinrichtung 3 und eine Festlegungseinrichtung 4 zur Festlegung der Messgeräteaufnahmevorrichtung 1 an einer in Fig. 1 nicht gezeigten Stativstange auf. Das Gehäuse 2 mit erster Aufnahmeeinrichtung 3 ist mittels einer ersten Höhenverstelleinrichtung 5 relativ zu der Festlegungseinrichtung 4 verstellbar.

Die erste Aufnahmeeinrichtung 3 umfasst eine Aufnahmeplatte 6 von im Wesentlichen quadratischer Umfangskontur. An der Aufnahmeplatte 6 ist ein Rasthaken 7 angeformt, der mittels eines Betätigungsgriffes 8 elastisch auslenkbar ist. Auf der Aufnahmeplatte 6 der ersten Aufnahmeeinrichtung 7 ist mittels des Rasthakens 7 ein erster Adapter 9 festgelegt, der ebenfalls eine quadratische Umfangskontur aufweist. Der erste Adapter 9 ist etwa in der Mitte jeder Seite mit einer Rastausnehmung 10 versehen, wobei in Fig. 1 die in der Zeichnung vordere Rastausnehmung 10 mit dem Rasthaken 7 rastend zusammenwirkt. Auf der dem Rasthaken 7 gegenüberliegenden Seite des ersten Adapters 9 greift ein Haken 11 in die entsprechende Rastausnehmung 10 des ersten Adapters 9 ein, so dass der Adapter 9 sicher in seiner gezeigten Fixierposition gehalten ist. Der erste Adapter 9 ist in vier um 90° zueinander versetzten Positionen mittels des Rasthakens 7 auf der Aufnahmeplatte 6 der ersten Aufnahmeeinrichtung 3 festlegbar. Eine zentrische Öffnung 12 des ersten Adapters 9 ist von einer Befestigungsschraube 13 durchsetzt, die in ein entsprechendes Innengewinde eines nicht gezeigten ersten Messgerätes einschraubbar ist, wodurch der erste Adapter 9 an dem ersten Messgerät in jeder Winkelposition festlegbar ist.

Zur Festlegung an Stativrohren, Klemmstangen oder Teleskopstangen dient die bereits erwähnte Festlegungseinrichtung 4. Diese ist mit einer als Klemmzange ausgebildeten Klemmeinrichtung 14 ausgestattet. Die Klemmeinrichtung 14 umfasst einen ersten Klemmbügel 15 mit einem ersten Griffteil 16. Mit dem ersten Klemmbügel 15 wirkt ein zweiter Klemmbügel 17 mit einem zweiten Griffteil 18 klemmend zusammen. Zu diesem Zweck sind die beiden Klemmbügel 15, 17 mit einem Drehgelenk 19 mit darin integrierter, nicht dargestellter Klemmfeder verbunden. Die Feder beaufschlagt den zweiten Klemmbügel 17 mit einer Federkraft in Richtung des ersten Klemmbügels 15, so dass zwischen den beiden Klemmbügeln 15, 17 eine Stativstange klemmend gehalten werden kann.

An den ersten Klemmbügel 15 ist als Bestandteil der ersten Festlegungseinrichtung 4 ein Führungsteil 20 angeformt, welches in seinem unteren Bereich eine untere Stativstangenanlage 21 umfasst, die zusammen mit dem Klemmbügel 15 eine sichere Anlage an einer Stativstange gewährleistet. Hierzu weisen der erste Klemmbügel 15 und die untere Stativstangenanlage 21 einen im Wesentlichen U-förmigen Querschnitt auf.

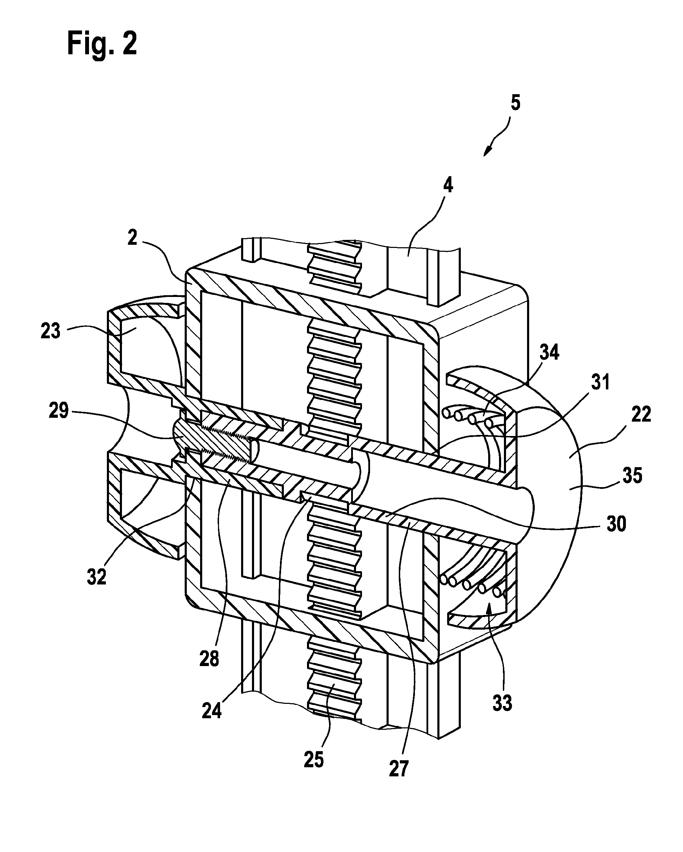

Die in Fig. 1 nur zum Teil ersichtliche Höhenverstelleinrichtung 5 umfasst zwei Drehknöpfe 22, 23 mittels denen ein in Fig. 2 dargestelltes Zahnrad 24 auf einer Zahnstange 25, die an der Festlegungseinrichtung 4 befestigt ist, verfahren werden kann. Das Gehäuse 2 ist dabei mittels einer Schwalbenschwanzführung 26 an dem Führungsteil 20 in senkrechter Richtung geführt und gesichert.

In Fig. 2 ist die Höhenverstelleinrichtung 5 im Detail dargestellt. Zu erkennen sind die beiden Drehknöpfe 22, 23, die auf zwei gegenüberliegenden Seiten an dem Gehäuse 2 anliegen. Jeder Drehknopf 22, 23 ist einstückig mit einem Wellenteilstück 27, 28 verbunden, wobei die beiden Wellenteilstücke 27, 28 ineinandergesteckt und mit einer Schraube 29 aneinander festgelegt sind und somit eine gemeinsame Welle 30 bilden. Die Welle 30 erstreckt sich durch zwei gegenüberliegende Lageröffnungen 31, 32 in dem Gehäuse 2. Auf dem Wellenteilstück 27 des Drehknopfes 22 ist das Zahnrad 24 angeformt. Durch Verdrehen der Drehknöpfe 22 wandert das Zahnrad 24 entlang der Zahnstange 25, wodurch wiederum das Gehäuse 2 zusammen mit der ersten Aufnahmeeinrichtung 3 relativ zu der Festlegungseinrichtung 4 verstellt wird.

Die Höhenverstelleinrichtung 5 umfasst einen Selbsthemmmechanismus 33 mit einer Schraubenfeder 34, die sich einends an der Außenseite 2 und anderenends an einer Innenfläche einer Stirnseite 35 des in der Zeichnungsebene rechten Drehknopfes 22 abstützt, wodurch eine selbsttätige Verstellung der Höhenverstelleinrichtung 5, etwa aufgrund des Gewichtes des Messgerätes, vermieden wird. Die notwendige Federkraft zur Realisierung der Selbsthemmung muss auf das Gewicht des Messgerätes abgestimmt werden.

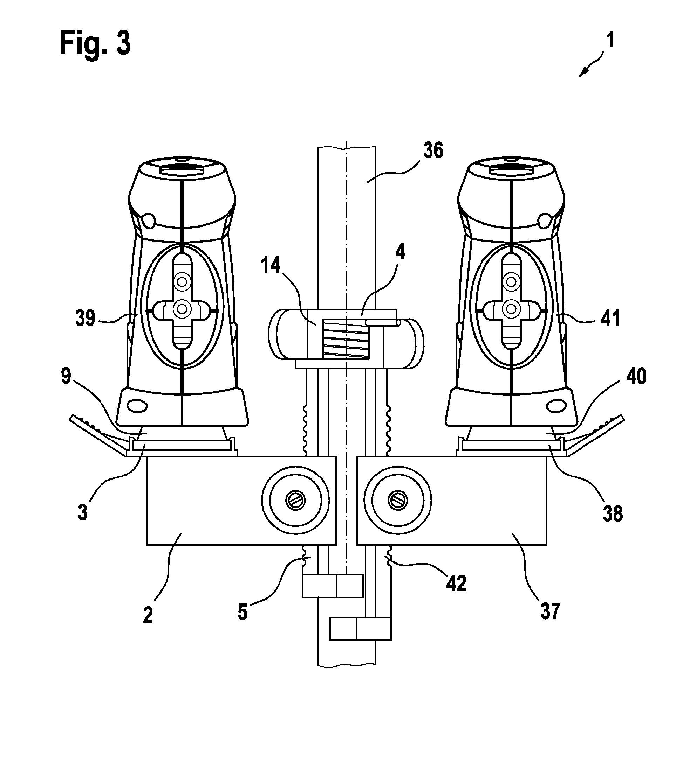

In Fig. 3 ist eine alternative Ausführungsform einer Messgeräteaufnahmevorrichtung 1 gezeigt. Diese ist mittels einer als Klemmeinrichtung 14 ausgebildeten Festlegungseinrichtung 4 an einer Klemmstange 36 (Stativstange) befestigt. Die Messgeräteaufnahmevorrichtung 1 umfasst neben dem ersten Gehäuse 2 mit erster Aufnahmeeinrichtung 3 ein zweites Gehäuse 37 mit einer zweiten Aufnahmeeinrichtung 38. An der ersten Aufnahmeeinrichtung 3 ist mittels des ersten Adapters 9 ein erstes Messgerät 39 (Nivellierlaser) festgelegt. Auf der identisch mit der ersten Aufnahmeeinrichtung 3 ausgebildeten zweiten Aufnahmeeinrichtung 38 ist mittels eines zweiten Adapters 40 ein mit dem ersten Messgerät 39 identisches Messgerät 41 festgelegt. Jedem Gehäuse 2, 37 ist eine in Fig. 2 im Detail dargestellte Höhenverstelleinrichtung 5, 42 zugeordnet, so dass die Arbeitshöhe für jedes Messgerät 39, 41 individuell eingestellt werden kann.

## Patentansprüche

1. Messgerätaufnahmevorrichtung mit einer ersten Aufnahmeeinrichtung (2) zum Aufnehmen eines ersten Messgerätes (39) und mit einer Festlegungseinrichtung (4) zum Festlegen der Messgerätaufnahmevorrichtung (1), insbesondere an einem Stativ (21),
**dadurch gekennzeichnet,**
**dass** ein mit dem ersten Messgerät (39) verbindbarer erster Adapter (9) vorgesehen ist, der lösbar an der ersten Aufnahmeeinrichtung (5) mittels eines Rastmechanismus befestigbar ist.

2. Messgeräteaufnahmevorrichtung nach Anspruch 1, **dadurch gekennzeichnet, dass** der erste Adapter (9) in diskreten oder beliebigen Winkelpositionen an der ersten Aufnahmeeinrichtung (3) befestigbar ist.

3. Messgeräteaufnahmevorrichtung nach der Ansprüche 1 oder 2, **dadurch gekennzeichnet, dass** mindestens ein zweiter mit mindestens einem zweiten Messgerät (41) verbindbarer Adapter (9) vorgesehen ist, der an mindestens einer zweiten Aufnahmeeinrichtung (38) mittels mindestens eines zweiten Rastmechanismus befestigbar ist.

4. Messgeräteaufnahmevorrichtung nach Anspruch 3, **dadurch gekennzeichnet, dass** der zweite Adapter (40) in diskreten oder beliebigen Winkelpositionen an der zweiten Aufnahmeeinrichtung (38) befestigbar ist.

5. Messgerätaufnahmevorrichtung nach einem der vorhergehenden Ansprüche, **dadurch gekennzeichnet, dass** die Festlegungseinrichtung (4) als Klemmeinrichtung (14), insbesondere als Klemmzange, ausgebildet ist.

6. Messgeräteaufnahmevorrichtung nach einem der vorhergehenden Ansprüche, **dadurch gekennzeichnet, dass** mindestens eine Höhenverstelleinrichtung (5) zum Höhenverstellen der ersten und/oder der zweiten Aufnahmeeinrichtung (3, 38) relativ zu der Festlegungseinrichtung (4) vorgesehen ist.

7. Messgerätaufnahmevorrichtung nach einem der vorhergehenden Ansprüche, **dadurch gekennzeichnet, dass** die Höhenverstelleinrichtung (5) eine Zahnstange (25) und ein mit der Zahnstange (25) kämmendes Zahnrad (24) umfasst.

8. Messgerätaufnahmevorrichtung nach Anspruch 7, **dadurch gekennzeichnet, dass** das Zahnrad (24) drehfest mit einer verdrehbaren Welle (30) ausgebildet oder angeordnet ist, die an ihren gegenüberliegenden Endseiten jeweils mit einem Drehknopf (22, 23) ausgestattet ist.

9. Messgerätaufnahmevorrichtung nach einem der Ansprüche 6 bis 8, **dadurch gekennzeichnet, dass** die Höhenverstelleinrichtung (5) mit einem Selbsthemmmechanismus(33) versehen ist.

10. Messgeräteaufnahmevorrichtung nach Anspruch 9, **dadurch gekennzeichnet, dass** der Selbsthemmmechanismus (5) ein Federelement, insbesondere eine Schraubenfeder (34) umfasst, das sich an einem der Drehknöpfe (22, 23) abstützend angeordnet ist.
